# EUROPEAN PATENT SPECIFICATION

(11) **EP 0 579 325 B1**
(45) Date of publication and mention of the grant of the patent: **20.05.1998**
(21) Application number: 93202021.7
(22) Date of filing: 09.07.1993
(51) Int. Cl.: H04N 5/32

(54) **X-ray examination apparatus**
Röntgenuntersuchungseinrichtung
Appareil d'examen à rayons X

(30) Priority: 17.07.1992 EP 92202191
(43) Date of publication of application: 19.01.1994
(73) Proprietor: Philips Electronics N.V., 5621 BA Eindhoven (NL)
(72) Inventor: Snoeren, Rudolph Maria, NL-5656 AA Eindhoven (NL); van Bussel, Antonius Johannus Franciscus, NL-5656 AA Eindhoven (NL)
(74) Representative: Schouten, Marcus Maria

(56) References cited:
- EP-A- 0 227 515
- US-A- 4 215 365
- US-A- 4 359 759
- PATENT ABSTRACTS OF JAPAN vol. 8, no. 17 (E-223)(1454) 25 January 1984 & JP-A-58 181 372
- PATENT ABSTRACTS OF JAPAN vol. 6, no. 129 (P-128)15 July 1982 & JP-A-57 053 129
- PATENT ABSTRACTS OF JAPAN vol. 12, no. 449 (E-686)(3296) 25 November 1988 & JP-A-63 178 499

## Description

The invention relates to an X-ray examination apparatus, comprsing an imaging screen for forming an image of an object or body to be examined, an image pick-up device comprising a pick-up face for converting said image into electric signals, and at least one illumination element for illuminating the pick-up face and a reflection system for reflecting light emitted by the at least one illumination element to the pick-up face.

An X-ray examination apparatus of this kind is known from the Japanse patent application **JP-A-58-181372**. In the known x-ray apparatus the illumination elements are arranged to illuminate the pick-up face *via* reflection from the imaging screen.

Further, the US-patent **US-A-4 359 759** mentions an X-ray apparatus which comprises an X-ray source for generating X-ray radiation whereby a part of a patient to be examined is irradiated. The shadow image thus formed is received by an image intensifier which forms an optical representation of the shadow image on the imaging screen. The optical representation is transferred, *via* an optical system, to the pick-up face of a television camera, after which the image can be processed by a signal processor and/or displayed on a monitor. The response time of the pick-up face of the television camera improves when light is incident thereon. Consequently, the optimum response time of the television camera is obtained only some time after activation of the X-ray source. This leads to a radiation load for the patient without diagnostically useful images being acquired. In order to achieve that the television camera has the desired response time already when the X-ray source is switched on, the known apparatus comprises a number of light-emitting diodes (LEDs) which are arranged on or in a plexiglass ring around the optical path from the image intensifier to the television camera. The side of the plexiglass ring facing the television camera is roughened so as to achieve diffusion of the light and hence uniform illumination of the pick-up face of the television camera.

It has been found that such a ring of LEDs is not very well suitable for obtaining a uniform light distribution on the pick-up face of the television camera. A second drawback of the known apparatus consists in that the plexiglass ring must be arranged at a sufficient distance from the television camera in order to ensure that the light emitted by the LEDs is incident on the pick-up face. This imposes restrictions in respect of the optical system between the image intensifier and the image pick-up device. Notably the realisation of a very compact construction of this part of the X-ray apparatus is hampered thereby. A further drawback consists in that the inner edge of the ring may be a source of undesirable reflections which may give rise to artefacts in the image picked up by the television camera.

It is *inter alia* an object of the invention to provide an apparatus for X-ray examination in which the response time is improved by making light incident on the pick-up face in a manner enabling uniform light distribution, in which a compact construction of the optical system can be achieved, and in which the risk of undesirable reflections is minimized.

To achieve this, an apparatus for X-ray examination in accordance with the invention is characterized in that the reflection system comprises a transparent element arranged in an optical path between the imaging screen and the pick-up face and which has an entrance face which faces the imaging screen and an exit face which faces the pick-up face, an optical path extending from the at least one illumination element to the pick-up face *via* reflection from the entrance face. As a result, the optical path of the light emitted by the illumination elements is folded, enabling a compact construction of the optical system. It has been found that a sufficiently uniform light distribution can thus be achieved. In one embodiment reflections of light, originating from the image intensifier, from the reflection system are avoided in that the reflection system does not comprise reflective edges which are situated in or near the light beam between the image intensifier and the image pick-up device. This embodiment of the apparatus in accordance with the invention is characterized in that the reflection system comprises a transparent element which has an entrance face which faces the imaging screen and an exit face which faces the pick-up face, an optical path extending from the at least one illumination element to the pick-up face *via* reflection from the entrance face. An embodiment is characterized in that the reflection system comprises a transparent element having an entrance face and an exit face, an optical path from the at least one illumination element to the pick-up face extending *via* reflection from a side face of the transparent element. The transparent element is made of, for example glass or a transparent synthetic material.

Preferably, the apparatus for X-ray examination in accordance with the invention is also characterized in that the transparent element comprises at least one recess, the illumination element being arranged in the recess. Thus, suitable optical positioning of the illumination elements relative to the entrance face of the transparent element is achieved and separate mechanical suspension of the illumination elements is not necessary.

A further embodiment of the apparatus for X-ray examination in accordance with the invention is characterized in that the at least one recess is provided with a mirror for reflecting light emitted by the illumination element to the entrance face. In this embodiment the structural and the optical requirements are combined better. By using a mirror, the recesses can be provided in a manner which is most attractive from a construction point of view, and the light of the illumination elements can be optimally directed onto the entrance face of the transparent element.

A preferred embodiment of the apparatus for X-ray examination in accordance with the invention is characterized in that the transparent element is a prism which is arranged in the optical path between the imaging screen and the pick-face, the entrance face of the prism enclosing an angle relative to the exit face of the prism, said recesses being provided in the entrance face. Using the prism, the image pick-up device can be arranged at an angle relative to the image intensifier so that it extends, for example perpendicularly thereto. This enables a very compact construction of the optical system of the X-ray apparatus. In this embodiment, the illumination element or illumination elements are provided on the side of the prism facing the image intensifier and the optical thickness of the prism is used to achieve a uniform light distribution on the pick-up face of the image pick-up device. The use of a transparent element in the form of a prism also offers the advantage that no additional element need be provided in the apparatus in order to illuminate the pick-up face.

An embodiment of the apparatus for X-ray examination in accordance with the invention is also characterized in that it includes four illumination elements in the form of light-emitting diodes (LEDs) which are arranged in regularly distributed positions around the optical path between the imaging screen and the pick-up face. It has been found that a number of four illumination elements arranged around the optical path provides sufficiently uniform illumination. LEDs are very suitable for use as illumination elements, because they are small, have a short response time, generate little heat, and emit light in a narrow wavelength range. The illumination can thus be suitably adapted to the spectral sensitivity of the pick-up element and fast switching is possible.

These and other, more detailed aspects of the invention will be described in detail hereinafter, by way of example, with reference to the drawings.

In the drawings
Fig. 1 shows a first embodiment of an apparatus for X-ray examination in accordance with the invention;
Fig. 2 shows a second embodiment of an apparatus for X-ray examination in accordance with the invention; and
Figs. 3a and 3b show a transparent element in accordance with the invention in the form of a prism and some details thereof.

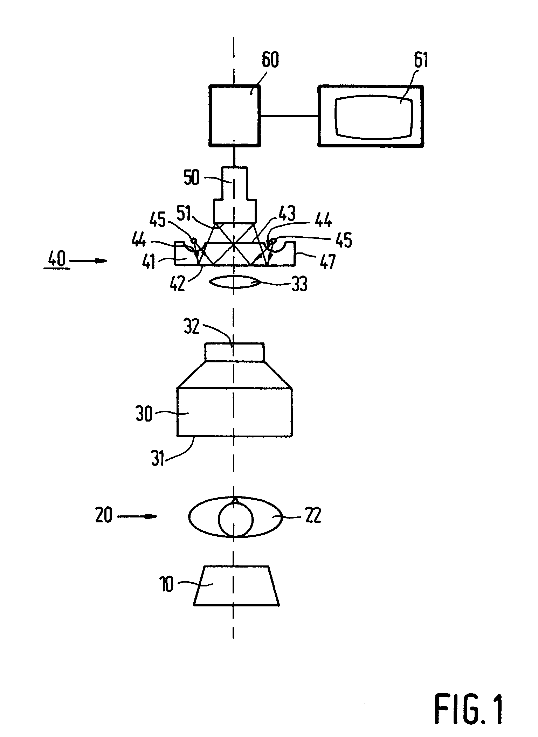

Fig. 1 shows diagrammatically an apparatus for X-ray examination. An X-ray source 10 is situated to one side of an examination space 20 in which, for example, a patient 22 can be arranged. To the other side of the examination space an image intensifier 30 is arranged opposite the X-ray source. The image intensifier 30 comprises an entrance screen 31 and an imaging screen 32. The imaging screen 32 is succeeded by an image pick-up device 50, for example a television camera comprising a pick-up face 51. The imaging screen is imaged on the pick-up face, for example by means of an optical system 33. The image pick-up device 50 is connected to a signal processing unit 60 and a monitor 61. It is also possible to couple the image pick-up device and the signal processing unit to other image processing equipment, for example a storage medium. The apparatus also comprises electric power supply units and control units which are not shown in the drawing.

When the X-ray source 10 is switched on, it emits X-rays in the direction of the patient 22 in the examination space 20. Due to density variations in the body of the patient, an X-ray shadow image is formed on the entrance screen 31 of the image intensifier 30. The image intensifier transfers this shadow image to its imaging screen 32 on which an image of the X-ray shadow image is formed in visible light. The image pick-up device 50 converts this image into an electric signal which is applied to the signal processing unit 60. After processing in the signal processing unit 60 or not, the image can be displayed on the monitor 61 and/or stored in a storage medium.

In an image pick-up device such as a television camera, the response time may be dependent on the light intensity intercepted briefly before by the image pick-up device. As a result, when the X-ray source is switched on, it will take some time before the image pick-up device reaches its optimum response time. During this time the patient is exposed to a radiation load even though no useful images for diagnosis can be picked up. In order to avoid this "dead time", the pick-up face 51 of the image pick-up device 50 is illuminated *via* a reflection system 40 arranged between the image intensifier 30 and the image pick-up device 50. Illumination takes place before and/or during the presence of an image on the imaging screen 32 of the image intensifier 30. Via a circuit (not shown), the illumination *via* the reflection system 40, can be switched off as soon as the X-ray source 10 is switched on. When the illumination is switched on in the presence of an image, a correction is performed, for example by subtracting a constant value from the intensities picked up.

In accordance with the invention, the illumination system comprises a reflection system 40 in the form of a transparent element 41 having a front face 42 which faces the image intensifier 30 and a rear face 43 which faces the image pick-up device 50. The transparent element 41 is arranged in the optical path between the image intensifier and the image pick-up device, without light from the image intensifier being obstructed thereby. The element 41 comprises one or more recesses 44 in which illumination elements 45, for example LEDs, are provided. The light emitted by the illumination elements is incident on the front face 42 from the rear and is reflected to the pick-up face 51 of the image pick-up device 50. Because this light is incident on the front face 42 at a large angle relative to the normal thereto, a large part of the light is reflected or even total internal reflection occurs. Instead of reflection from the front face, reflection can occur also from the side faces of element 41 or from the front face as well as from the side faces. If these side faces are not polished, a given degree of diffuse reflection also takes place, thus increasing the uniformity of the light distribution across the pick-face. As is indicated, the recesses 44 may be cavities in the rear of the transparent element 41 but may also be formed as holes extending through the entire thickness of the element, or as recesses in the edge of the element.

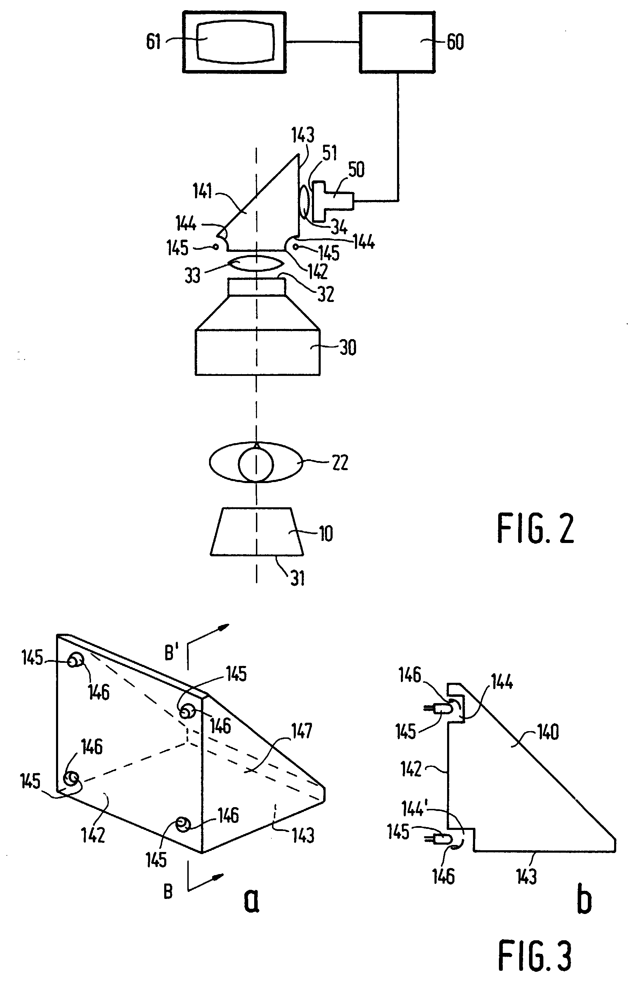

Fig. 2 shows a second embodiment of an apparatus for X-ray examination in accordance with the invention. This embodiment also comprises an X-ray source 10, an image intensifier 30, an image pick-up device 50, a signal processing unit 60 and a monitor 61. These components are comparable with those of the already described embodiment and, therefore, will not be described again. In the present embodiment, the pick-up face 51 of the image pick-up device 50 is tilted relative to the imaging screen 32 of the image intensifier 30. In the optical path between the image intensifier 30 and the image pick-up device 50 there is arranged a prism 141 whose oblique side acts as a mirror. The prism may form part of the optical system which is also shown to comprise the lenses 33 and 34. The advantage of this construction resides in the fact that less space is required along the longitudinal axis of the apparatus, so that the overall dimensions of the X-ray apparatus can be reduced. In the entrance face 142 of the prism 141, facing the image intensifier 30, there are provided recesses 144 in which illumination elements 145, for example LEDs are arranged. Light emitted by these illumination elements emerges, after reflection from the entrance face 142 and the oblique face of the prism 141, from the exit face 143 and is incident on the pick-up face 51 of the image pick-up device 50. Reflection from the side faces 147 of the prism 141 is also possible instead of or in addition to reflection from the entrance face 142. As has already been described with reference to Fig. 1, the response time of the image pick-up device is thus adjusted to the desired level or maintained at that level when the X-ray source 10 is not activated.

Figs. 3a and 3b show some details of a prism as used in the apparatus shown in Fig. 2. Fig. 3a is a perspective view and Fig. 3b is a cross-sectional view taken along the line B-B'. The prism is formed by a half cube of a transparent material. The entrance and exit faces 142 and 143 are side faces of the cube. At the oblique side, along one of the diagonals of the cube, the light incident *via* the entrance face 142 is reflected to the exit face 143 by means of a reflective layer provided thereon or by total internal reflection. Near the four corners of the entrance face 142 there are provided recesses in which illumination elements 145 are provided. Adjacent the illumination elements there are provided reflectors 146 for reflecting light emitted by the illumination elements 145 in the direction of the entrance face 142. As has already been described, this light is then reflected from the entrance face and the reflective oblique side to the exit face 143 and the pick-up device.

Fig. 3b shows two feasible recesses with illumination elements. The recess 144 is a bore which extends in the prism and for the recess 144' a corner of the prism has been removed; this recess is open not only at the side of the entrance face 142 but also at one or both adjacent sides of the prism. In order to ensure that light emitted by the illumination elements 145 is incident as much as possible perpendicularly to the wall of the recess, the recesses preferably have a circular cross-section.

## Claims

1. An X-ray examination apparatus comprising
- an imaging screen (32) for forming an image of an object (22) or body to be examined,
- an image pick-up device (50) comprising a pick-up face (51) for converting said image into electric signals, and
- at least one illumination element (45,145) for illuminating the pick-up face (51) and
- a reflection system (40) for reflecting light emitted by the at least one illumination element (45,145) to the pick-up face (51),
characterized in that
- the reflection system (40)
- is arranged in an optical path between the imaging screen (32) and the pick-up face and
- comprises a transparent element (41,141) which has
- an entrance face (42,142) which faces the imaging screen (32) and
- an exit face (43,143) which faces the pick-up face (51);
- an optical path extends from the at least one illumination element (45,145) to the pick-up face (51) *via* reflection from the entrance face (42,142).

2. An X-ray examination apparatus as claimed in Claim 1, characterized in that
- an optical path extends from the at least one illumination element (45,145) to the pick-up face (51) *via* reflection from a side face (47,147) of the transparent element (41,141).

3. An X-ray examination apparatus as claimed in Claim 1 or 2, characterized in that
- the transparent element (41,141) comprises at least one recess (44,144),
- the illumination element (45,145) being arranged in the recess (44,144).

4. An X-ray examination apparatus as claimed in Claim 3, characterized in that
- the at least one recess (144) is provided with a mirror (146) for reflecting light emitted by the illumination element (145) to the entrance face (142).

5. An X-ray examination apparatus as claimed in any one of the preceding Claims, characterized in that
- the transparent element (141) is a prism which is arranged in the optical path between the imaging screen (32) and the pick-up face (51),
- the entrance face (142) of the prism (141) enclosing an angle relative to the exit face of the prism (141),
- said recesses (144) being provided in the entrance face (142).

6. An X-ray examination apparatus as claimed in anyone of Claims 1 to 4, characterized in that
- it includes four illumination elements (145) in the form of light-emitting diodes (LEDs) which are arranged in regularly distributed positions around the optical path between the imaging screen (32) and the pick-up face (51).

7. An X-ray examination apparatus as claimed in any one of the preceding Claims, the entrance face (142) of the transparent element (141) of which is provided with at least one recess (144) for accommodating an illumination element (145).

## Patentansprüche

1. Röntgenuntersuchungsgerät mit
- einem Abbildungsschirm (32) zum Bilden eines Bildes eines Objekts (22) oder zu untersuchenden Körpers,
- einer Bildaufnahmeeinrichtung (50) mit einer Aufhahmefläche (51) zum Umwandeln des genannten Bildes in elektrische Signale und
- zumindest einem Beleuchtungselement (45, 145) zum Beleuchten der Aufnahmefläche (51),
- einem Reflexionssystem (40) zum Reflektieren von von dem zumindest einen Beleuchtungselement (45, 145) emittierten Licht zur Aufhahmefläche (51),
dadurch gekennzeichnet, daß
- das Reflexionssystem (40)
- in einem Lichtweg zwischen dem Abbildungsschirm (32) und der Aufnahmefläche angeordnet ist und
- ein transparentes Element (41, 141) umfaßt, das
- eine dem Abbildungsschirm (32) zugewandte Eintrittsfläche (42, 142) und
- eine der Aufnahmefläche (51) zugewandte Austrittsfläche (43, 143) hat;
- ein Lichtweg von dem zumindest einen Beleuchtungselement (45, 145) über Reflexion an der Eintrittsfläche (42, 142) zur Aufnahmefläche (51) verläuft.

2. Röntgenuntersuchungsgerät nach Anspruch 1, dadurch gekennzeichnet, daß
- ein Lichtweg von dem zumindest einen Beleuchtungselement (45, 145) über Reflexion an einer Seitenfläche (47, 147) des transparenten Elements (41, 141) zur Aufnahmefläche (51) verläuft.

3. Röntgenuntersuchungsgerät nach Anspruch 1 oder 2, dadurch gekennzeichnet, daß
- das transparente Element (41, 141) zumindest eine Aussparung (44, 144) umfaßt,
- wobei das Beleuchtungselement (45, 145) in der Aussparung (44, 144) angeordnet ist.

4. Röntgenuntersuchungsgerät nach Anspruch 3, dadurch gekennzeichnet, daß
- die zumindest eine Aussparung (144) mit einem Spiegel (146) versehen ist zum Reflektieren von vom Beleuchtungselement (145) emittiertem Licht zur Eintrittsfläche (142).

5. Röntgenuntersuchungsgerät nach einem der vorhergehenden Ansprüche, dadurch gekennzeichnet, daß
- das transparente Element (141) ein Prisma ist, das im Lichtweg zwischen dem Abbildungsschirm (32) und der Aufnahmefläche (51) angeordnet ist,
- wobei die Eintrittsfläche (142) des Prismas (141) mit der Austrittsfläche des Prismas (141) einen Winkel bildet,
- wobei die genannten Aussparungen (144) in der Eintrittsfläche (142) vorgesehen sind.

6. Röntgenuntersuchungsgerät nach Anspruch 1 bis 4, dadurch gekennzeichnet, daß
- es vier Beleuchtungselemente (145) in Form von Leuchtdioden (LEDs) enthält, die in regelmäßig verteilten Positionen um den Lichtweg zwischen dem Abbildungsschirm (32) und der Aufhahmefläche (51) herum angeordnet sind.

7. Röntgenuntersuchungsgerät nach einem der vorhergehenden Ansprüche, wobei die Eintrittsfläche des transparenten Elements (141) mit zumindest einer Aussparung (144) zum Unterbringen eines Beleuchtungselements (145) versehen ist.

## Revendications

1. Appareil d'examen à rayons X comportant
- un écran de représentation d'image (32) pour former une image d'un objet (22) ou d'un corps à examiner,
- un dispositif de prise d'image (50) comportant une face de prise d'image (51) pour convertir ladite image en des signaux électriques, et
- au moins un élément d'illumination (45, 145) pour illuminer la face de prise d'image 51, et
- un système de réflexion (40) pour réfléchir de la lumière emise par au moins un élément d'illumination (45, 145) vers la face de prise d'image (51),
caractérisé en ce que
- le système de réflexion (40)
- est disposé dans un trajet optique situé entre l'écran de représentation d'image (32) et la face de prise d'image, et
- il comporte un élément transparent (41, 141) présentant
- une face d'entrée (42, 142) qui est située vis-à-vis de l'écran de représentation d'image (32 et
- une face de sortie (43, 143) qui est située vis-à-vis de la face de prise d'image (51);
- un trajet optique s'étendant à partir d'au moins un élément d'illumination (45, 145) vers la face de prise d'image (51) par l'intermédiaire de réflexion provenant de la face d'entrée (42, 142).

2. Appareil d'examen à rayons X selon la revendication 1, caractérisé en ce que
- un trajet optique s'étend à partir d'au moins un élément d'illumination (45, 145) vers la face de prise d'image (51) par l'intermédiaire de réflexion provenant d'une face latérale (47, 147) de l'élément transparent (41, 141).

3. Appareil d'examen à rayons X selon la revendication 1 ou 2, caractérisé en ce que
- l'élément transparent (41, 141) comporte au moins un évidement (44, 144),
- les éléments d'illumination (45, 145) étant disposés dans l'évidement (44, 144).

4. Appareil d'examen à rayons X selon la revendication 3, caractérisé en ce que
- au moins un évidement (144) est muni d'un miroir (146) pour réfléchir de la lumière émise par l'élément d'illumination (145) vers la face d'entrée (142).

5. Appareil d'examen à rayons X selon l'une quelconque des revendications précédentes, caractérisé en ce que
- l'élément transparent (141) est un prisme qui est disposé dans le trajet optique situé entre l'écran de représentation d'image (32) et la face de prise d'image (51),
- la face d'entrée (142) du prisme (141) faisant un angle avec la face de sortie du prisme (141),
- lesdits évidements (144) sont pratiqués dans la face d'entrée (142).

6. Appareil d'examen à rayons X selon l'une quelconque des revendications 1 à 4, caractérisé en ce que
- il comporte quatre éléments d'illumination (145) en forme de diodes électroluminescentes (LEDs) qui sont disposées dans des positions régulièrement distribuées autour du trajet optique situé entre l'écran de représentation d'image (32) et la face de prise d'image (51).

7. Appareil d'examen à rayons X selon l'une quelconque des revendications précédentes, la face d'entrée (142) de l'élément transparent (141) étant munie d'au moins un évidement (144) pour incorporer un élément d'illumination (145).
